# EUROPEAN PATENT APPLICATION

(11) **EP 3 835 640 A1**
(43) Date of publication of application: **16.06.2021**
(21) Application number: 20172759.1
(22) Date of filing: 04.05.2020
(51) Int. Cl.: F16L 27/047, B05B 1/18, F16L 27/073

(54) **SPHERICAL JOINT AND SHOWER ASSEMBLY**

(30) Priority: 13.12.2019 CN 201922237218 U
(71) Applicant: Fujian Xihe Sanitary Ware Technology Co., Ltd., QuanZhou, Fujian 362304 (CN)
(72) Inventor: LIN Xiaofa, Nan'an City, QuanZhou, Fujian (CN); LIN Xiaoshan, Nan'an City, QuanZhou, Fujian (CN); LI Dayuan, Nan'an City, QuanZhou, Fujian (CN); DENG Xiaoqing, Nan'an City, QuanZhou, Fujian (CN); LIU Qiqiao, Nan'an City, QuanZhou, Fujian (CN)
(74) Representative: Patentanwälte Bals & Vogel

(57) **Abstract**

The present invention discloses a spherical joint (1) and a shower assembly. The spherical joint (1) consists of a connector (11) and a water outlet joint (12) that can be separated from each other, wherein the water outlet joint (12) is made of environmentally friendly materials, and a plug-in pipe (121) of the water outlet joint (12) is in sealed communication with a water inlet pipe (2) to form a water passage that is isolated from an inner wall of a connecting pipe (111) of the connector (11). Compared with an integrally formed spherical joint, the spherical joint (1) reduces difficulty in processing, saves production costs, improves production efficiency, and is more environmentally friendly.

## Description

### BACKGROUND

### Technical Field

The present invention relates to the field of sanitary ware, in particular, to a spherical joint and a shower assembly.

### Description of Related Art

Spherical joint is generally used to make the shower head be rotatable at any angle. However, the existing spherical joints are integrally formed, which is costly and complicated, and most of the existing spherical joints are made of metal materials, in which the inner wall provided with anelectroplated coating, such that the water quality is easily affected during long-term use. Therefore, the existing spherical joint has to be further improved.

### SUMMARY

The present invention is to overcome the above-mentioned defects or problems described in the prior art by providing a spherical joint and a shower assembly with simple production process, low cost and environmental protection.

To achieve the above object, the present invention adopts the following technical solutions:
A spherical joint, labeled as a first technical solution, for communicating a water inlet pipe made of environmentally friendly materials and a water inlet end of a shower head and making the shower head rotatable, includes: a connector, provided with a connecting pipe and a first splicing portion, one end of the connecting pipe being in sealed connection with the water inlet pipe, the first splicing portion extending from an outer wall of the connecting pipe in a direction away from the water inlet end of the connecting pipe and forming a bowl shape; and a water outlet joint, provided with a plug-in pipe and a second splicing portion, the second splicing portion extending from an outer wall of the plug-in pipe in a direction close to the connector and forming a bowl shape, the second splicing portion further extending to form a first annular protrusion in a direction close to the connector, a maximum outer diameter of the second splicing portion being greater than or equal to a maximum outer diameter of the first splicing portion; the plug-in pipe is inserted into the connecting pipe and is in sealed communication with the water inlet pipe to form a water passage that is isolated from an inner wall of the connecting pipe; the first splicing portion is sleeved on the first annular protrusion and spliced with the second splicing portion to form a spherical body that is matched with a spherical surface of the shower head; the water outlet joint is made of environmentally friendly materials.

Based on the first technical solution, a second technical solution is further provided, and in the second technical solution: a first curved surface is provided between an end surface of a free end of the first splicing portion and an outer side wall of the first splicing portion, and a second curved surface is provided between an end surface of a free end of the second splicing portion and an outer side wall of the second splicing portion; when the first splicing portion is spliced with the second splicing portion, the end surface of the first splicing portion is pressed against the end surface of the second splicing portion, and the first curved surface connects the second curved surface.

Based on the first technical solution, a third technical solution is further provided, and in the third technical solution: a sealing washer is provided in the connecting pipe, wherein the plug-in pipe presses against one end of the sealing washer, the water inlet pipe presses against the other end of the sealing washer such that the plug-in pipe is in sealed communication with the water inlet pipe, and the water passage is isolated from the inner wall of the connecting pipe.

Based on the third technical solution, a fourth technical solution is further provided, and in the fourth technical solution: a water inlet end of the plug-in pipe is provided with a second annular protrusion extending in a direction close to the connector, and the second annular protrusion presses against one end of the sealing washer.

Based on the third technical solution, a fifth technical solution is further provided, and in the fifth technical solution: the connecting pipe is further provided inside with a third annular terrace, and the sealing washer is placed on the third annular terrace and partially protrudes from the third annular terrace.

Based on the first technical solution, a sixth technical solution is further provided, and in the sixth technical solution: the plug-in pipe is in an interference fit with the connecting pipe.

Based on the sixth technical solution, a seventh technical solution is further provided, and in the seventh technical solution: the spherical joint further includes a first sealing ring, wherein the connecting pipe is provided inside with an annular groove, and the first sealing ring is placed in the annular groove and is sleeved on the plug-in pipe.

Based on the first technical solution, an eighth technical solution is further provided, and in the eighth technical solution: the connecting pipe is integrally formed with the first splicing portion, and the plug-in pipe is integrally formed with the second splicing portion.

The present invention further provides a shower assembly, labeled as a ninth technical solution, including: a spherical joint, which is the spherical joint according to any one of the first to eight technical solutions; a water inlet pipe, in sealed connection with one end of the connecting pipe; and a shower head, comprising a shower head body, a connecting cover and a sealing member; the shower head body is provided with a receiving cavity, and water inlet holes and water outlet holes that are communicated with each other, an opening of the receiving cavity is oriented to the water outlet end of the spherical joint, the water inlet holes are located at a bottom of the receiving cavity, and the water inlet holes are in sealed communication with the plug-in pipe; the connecting cover is detachably fixed to the receiving cavity of the shower head body, sleeved on the first splicing portion of the spherical joint, and forms a spherical fit with the first splicing portion; the sealing member, sleeved on the second splicing portion of the spherical joint and forming a spherical fit with the second splicing portion; the shower head is made of environmentally friendly materials.. Based on the ninth technical solution, a tenth technical solution is further provided, and in the tenth technical solution: the water outlet end of the spherical joint is located in the receiving cavity.

As can be seen from the above description of the present invention, compared with the prior art, the present invention has the following beneficial effects:
1. In the first technical solution, the spherical joint of the present invention consists of a connector and a water outlet joint that can be separated from each other, which reduces difficulty in processing, saves production costs, improves production efficiency, as compared with an integrally formed spherical joint; the first splicing portion is sleeved on the first annular protrusion and spliced with the second splicing portion to form a spherical body that is matched with a spherical surface of the shower head, which facilitates the assembly; a maximum outer diameter of the second splicing portion is greater than or equal to a maximum outer diameter of the first splicing portion, so that after the first splicing portion is spliced with the second splicing portion to form a spherical body, a connecting cover is sleeved on the first splicing portion of the spherical joint and a sealing member is sleeved on the second splicing portion of the spherical joint when the spherical joint is matched with the spherical surface of the shower head, such that the water inlet end of the shower head is in sealed communication with the plug-in pipe, and the sealing member rotates with the shower head as the shower head rotates on the spherical body, when the sealing member partially slides to a position where the second splicing portion is spliced with the first splicing portion, since the maximum outer diameter of the second splicing portion being greater than or equal to the maximum outer diameter of the first splicing portion, the sealing member could slide onto the first splicing portion more easily, and a portion of the sealing member located on the first splicing portion may slide to the second splicing portion under the pushing force of the connecting cover sealing member, which is convenient for the user to operate; the plug-in pipe of the water outlet joint is in sealed communication with the water inlet pipe to form a water passage isolated from the inner wall of the connecting pipe, and since the water outlet joint and the water inlet pipe are made of environmentally friendly materials, the water entering the shower head's water inlet end is pollution-free and more environmentally friendly.
2. In the second technical solution, when the first splicing portion is spliced with the second splicing portion, the end surface of the first splicing portion is pressed against the end surface of the second splicing portion, and the first curved surface connects the second curved surface, so that the sealing member slides more smoothly at the position where the first splicing portion is spliced with the second splicing portion, which is more convenient for the user to operate.
3. In the third technical solution, the spherical joint further includes a sealing washer, wherein the plug-in pipe presses against one end of the sealing washer, the water inlet pipe presses against the other end of the sealing washer such that the plug-in pipe is in sealed communication with the water inlet pipe, and the water passage is isolated from the inner wall of the connecting pipe, thus the structure is simple and practical, the process is simple and the installation is convenient.
4. In the fourth technical solution, the plug-in pipe is provided with the second annular protrusion, so that the plug-in pipe is more tightly fit with the sealing washer.
5. In the fifth technical solution, the third annular terrace is provided inside the connecting pipe, so that the structure is simple, and the installation of the sealing washer is more convenient.
6. In the sixth technical solution, the plug-in pipe is in an interference fit with the connecting pipe, so that the process is simple.
7. In the seventh technical solution, the first sealing washer is provided, which further ensures the sealed communication between the plug-in pipe and the water inlet pipe.
8. In the eighth technical solution, the connecting pipe is integrally formed with the first splicing portion, and the plug-in pipe is integrally formed with the second splicing portion, so that the production process is simple.
9. In the ninth technical solution, the present invention provides a shower assembly that includes the spherical joint according to any one of the first to eight technical solutions, and the spherical joint of the present invention consists of a connector and a water outlet joint that can be separated from each other, which reduces difficulty in processing, saves production costs, improves production efficiency, as compared with an integrally formed spherical joint; the first splicing portion is sleeved on the first annular protrusion and spliced with the second splicing portion to form a spherical body that is matched with a spherical surface of the shower head, which facilitates the assembly; a maximum outer diameter of the second splicing portion is greater than or equal to a maximum outer diameter of the first splicing portion, so that after the first splicing portion is spliced with the second splicing portion to form the spherical body, it is easier to smoothly transition at the position where the second splicing portion is spliced with the first splicing portion for facilitating rotation when the shower is matched with the spherical body, wherein in specific implementation, the shower head body is spherically matched with the second splicing portion through the sealing member, and the connecting cover is spherically matched with the first splicing portion, so that during the rotation of the shower head, when the sealing member partially slides to a position where the second splicing portion is spliced with the first splicing portion, since the maximum outer diameter of the second splicing portion is greater than or equal to the maximum outer diameter of the first splicing portion, the sealing member could slide onto the first splicing portion more easily, and a portion of the sealing member located on the first splicing portion may slide to the second splicing portion under the pushing force of the connecting cover, which is convenient for the user to operate; the plug-in pipe of the water outlet joint is in sealed communication with the water inlet pipe to form a water passage isolated from the inner wall of the connecting pipe, and the water inlet hole of the shower head body is in sealed communication with the plug-in pipe, since the water outlet joint and the water inlet pipe are made of environmentally friendly materials, the water pollution from the water outlet hole of the shower head is prevented, which is more environmentally friendly.
10. In the tenth technical solution, the water outlet end of the spherical joint is located in the receiving cavity, further ensuring that the water entering the shower head body is not polluted, and ensuring the tightness of the entire waterway.

### BRIEF DESCRIPTION OF THE DRAWINGS

In order to be more clearly illustrating the technical solutions of embodiments of the present invention, the drawings which are required to be used in the description of the embodiments will be briefly described below. It is obvious that the drawings described below are only some embodiments of the present invention. It will be apparent to one of ordinary skill in the art that other drawings may be obtained based on the accompanying drawings without inventive effort.
Fig. 1 is an exploded view of a structure of Embodiment 1 of the present invention;
Fig. 2 is a cross-section view of Embodiment 1 of the present invention;
Fig. 3 is an enlarged view of part A of Embodiment 1 of the present invention;
Fig. 4 is a cross-section view of Embodiment 2 of the present invention;
Fig. 5 is an enlarged view of part B of Embodiment 2 of the present invention;
Fig. 6 is an exploded view of a structure of Embodiment 3 of the present invention;
Fig. 7 is an overall view of Embodiment 3 of the present invention;
Fig. 8 is a cross-section view of Embodiment 3 of the present invention;
Fig. 9 is a cross-section view of Embodiment 4 of the present invention.

### Description of main reference numerals:

1 spherical joint;
   11 connector, 111 connecting pipe, 1111 third annular terrace, 112 first splicing portion, 1121 first curved surface;
   12 water outlet joint, 121 plug-in pipe, 1211 second annular protrusion, 122 second splicing portion, 1221 first annular protrusion, 1222 second curved surface;
   13 sealing washer, 14 first sealing ring;
2 water inlet pipe;
3 shower head;
   31 shower head body, 311 first body, 312 inner bracket, 3121 receiving cavity, 313 water outlet sleeve, 314 surface cap;
   32 connecting cover, 321 cover body, 322 spherical joint sleeve;
   33 sealing member, 331 second sealing ring, 332 annular gasket.

### DESCRIPTION OF THE EMBODIMENTS

The technical solutions of the embodiments of the present invention are clearly and completely described below with reference to the accompanying drawings in the present invention. Obviously, the described embodiments are preferred embodiments of the present invention, and should not be regarded as excluding other embodiments. Based on the embodiments of the present invention, all the other embodiments obtained by those of ordinary skill in the art without inventive effort are within the scope of the present invention.

In the claims, the description and the drawings of the present invention, unless otherwise explicitly defined, the terms "first", "second", or "third" are used to distinguish different objects, and not to describe a specific order.

In the claims, the description and the drawings of the present invention, unless otherwise explicitly defined, the orientation terms such as "center", "horizontal", "longitudinal", "horizontal", "vertical", "top", "bottom", "inside", "outside", "up", "down", "front", "back", "left", "right", "clockwise", "counterclockwise", etc. are used to indicate orientation or positional relationship based on the orientation and positional relationship shown in the drawings, and are only for the convenience of describing the present invention and simplifying description, do not indicate or imply that the device or element referred to must have a specific orientation or be constructed and operated in a specific orientation, therefore those cannot be understood as limiting the specific protection scope of the present invention.

In the claims, the description and the drawings of the present invention, unless otherwise explicitly defined, if the term "fixed connection" or "fixedly connected" is used, it should be understood in a broad sense, that is, any connection method without displacement relationship and relative rotation relationship between the two, that is, including non-removable fixed connection, removably fixed connection, connected as a whole, and fixed connection through other devices or components.

In the claims, the description and the drawings of the present invention, the terms "including", "having" and their variations are intended to be "including but not limited to".

### Embodiment 1

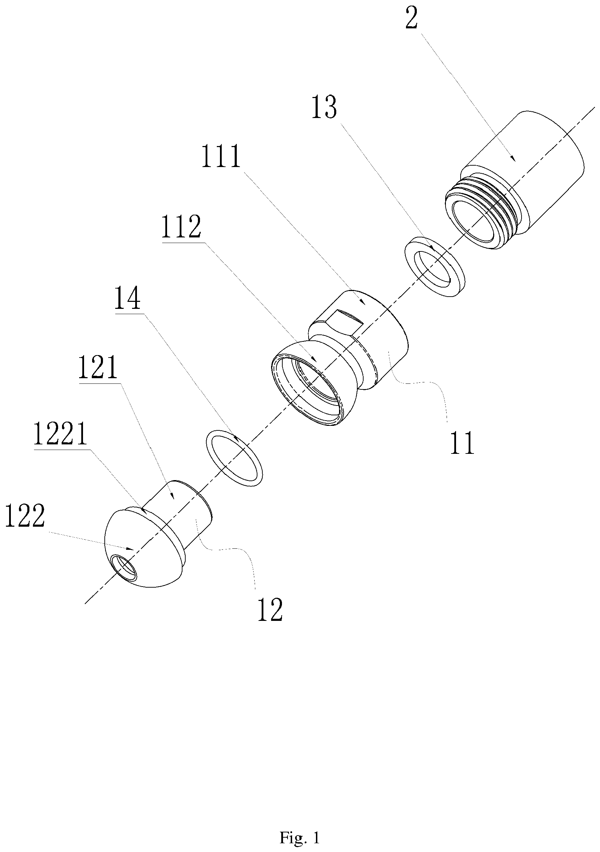

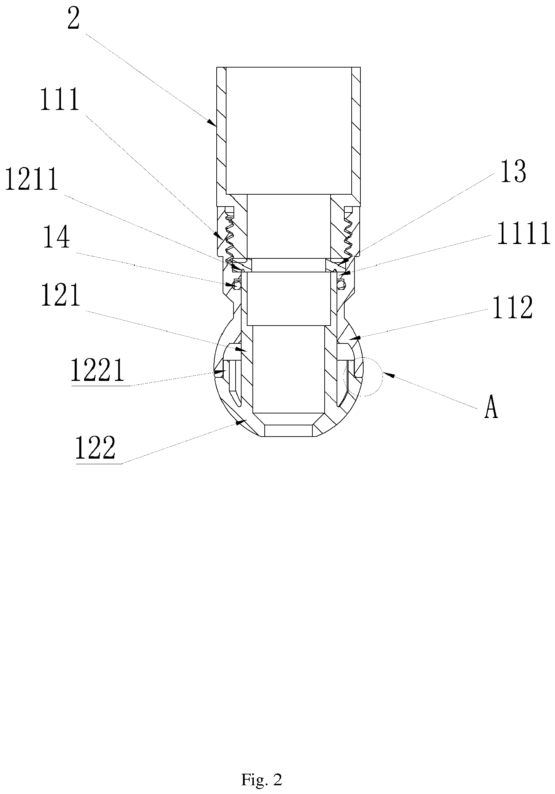

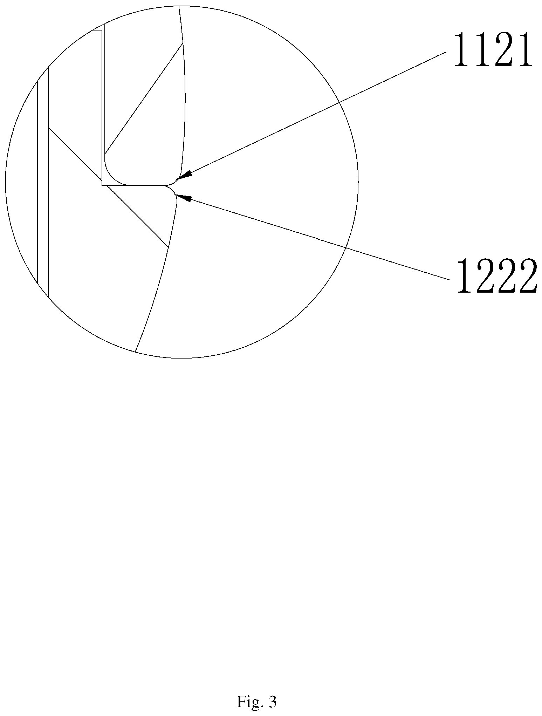

As shown in Figs. 1 to 3, a spherical joint 1, for communicating a water inlet pipe 2 with a water inlet end of a shower head and making the shower head rotatable, includes a connector 11, a water outlet joint 12, a sealing washer 13 and a first sealing ring 14, wherein the water inlet pipe 2 is made of environmentally friendly materials such as stainless steel SUS201 that does not contain an electroplated coating. It should be understood that the water inlet pipe 2 may also be a double-layer water inlet pipe 2 and the inner pipe is made of plastic, which is not described in detail in the present invention.

The connector 11 is provided with a connecting pipe 111 and a first splicing portion 112, an inner wall at one end of the connecting pipe 111 is provided with an inner thread that matches with an outer thread of the water inlet pipe 2 for being in sealed connection with the water inlet pipe 2, and the first splicing portion 112 extends from an outer wall of the connecting pipe 111 in a direction away from the water inlet end of the connecting pipe 111 and forming a bowl shape. It should be understood that the first splicing portion 112 may extend from an outer side wall of the connecting pipe 111 or may extend from a bottom wall of the connecting pipe 111. In the present embodiment, the first splicing portion 112 extends from a bottom wall of the connecting pipe 111 in a direction away from the water inlet end of the connecting pipe 111 and forming a bowl shape, and the bottom wall of the connecting pipe is close to a water outlet end of the connecting pipe 111 and the first splicing portion 112 is integrally formed with the connecting pipe 111 and is made of brass H59, so that the production process is simple. In the present embodiment, the connecting pipe 111 is further provided inside with a third annular terrace 1111 and an annular groove (not shown), and a first curved surface 1121 is provided between an end surface of a free end of the first splicing portion 112 and an outer side wall of the first splicing portion 112.

The sealing washer 13 is placed on the third annular terrace 1111 and partially protrudes from the third annular terrace 1111, and the water inlet pipe 2 extends into the connecting pipe 111 and presses against an upper end of the sealing washer 13; the first sealing ring 14 is provided in the annular groove.

The water outlet joint 12 is provided with a plug-in pipe 121 and a second splicing portion 122, the second splicing portion 122 extending from an outer wall of the plug-in pipe 121 in a direction close to the connector 11 and forming a bowl shape. It should be understood that the second splicing portion 122 may extend from the outer side wall of the plug-in pipe 121 or may extend from a bottom wall of the plug-in pipe 121. In the present embodiment, the second splicing portion 122 extends from the bottom wall of the plug-in pipe 121 in a direction close to the connector 11. In a specific implementation, the second splicing portion 122 also extends from the bottom of the plug-in pipe 121 in a direction close to the connector 11, so that the second splicing portion 122 forms a hemispherical body, wherein the second splicing portion 122 is integrally formed with the plug-in pipe 121 and is made of environmentally friendly materials such as polyoxymethylene. A water inlet end of the plug-in pipe 121 is provided with a second annular protrusion 1211 extending in a direction close to the connector 11, and the second splicing portion 122 further extends to form a first annular protrusion 1221 in a direction close to the connector 11, wherein a maximum outer diameter of the second splicing portion 122 is equal to a maximum outer diameter of the first splicing portion 112, and a second curved surface 1222 is provided between an end surface of a free end of the second splicing portion 122 and an outer side wall of the second splicing portion 122. The plug-in pipe 121 is inserted into the connecting pipe 111 and forms an interference fit with the connecting pipe 111, the plug-in pipe 121 presses the first sealing ring 14, and the second annular protrusion 1211 of the connecting pipe 121 presses against a lower end of the sealing washer 13, so that under the joint action of the sealing washer 13 and the first sealing ring 14, the plug-in pipe 121 is in sealed communication with the water inlet pipe 2 to form a water passage that is isolated from an inner wall of the connecting pipe 111. The structure is simple and practical, the production process is simple and the installation is convenient, and the water entering the water inlet end of the shower head is not polluted by any electroplated coating.

When the plug-in pipe 121 forms an interference fit with the connecting pipe 111, the first splicing portion 112 is sleeved on the first annular protrusion 1221 and spliced with the second splicing portion 122 to form a spherical body matched with the spherical surface of the shower head, the end surface of the first splicing portion 112 is pressed against the end surface of the second splicing portion 122, an inner side wall of the first splicing portion 112 abuts against an outer side wall of the first annular protrusion 1221, and the first curved surface 1121 connects the second curved surface 1222.

The spherical joint 1 of the present embodiment consists of a connector 11 and a water outlet joint 12 that can be separated from each other, which reduces difficulty in processing, saves production costs, improves production efficiency, as compared with an integrally formed spherical joint 1; the first splicing portion 112 is sleeved on the first annular protrusion 1221 and spliced with the second splicing portion 122 to form a spherical body that is matched with a spherical surface of the shower head 3, which facilitates the assembly; a maximum outer diameter of the second splicing portion 122 is equal to a maximum outer diameter of the first splicing portion 112, so that after the first splicing portion 112 is spliced with the second splicing portion 122 to form the spherical body, it is easier to smoothly transition at the position where the second splicing portion 122 is spliced with the first splicing portion 112 for facilitating rotation when the shower head 3 is matched with the spherical body; the plug-in pipe 121 of the water outlet joint 12 is in sealed communication with the water inlet pipe 2 to form a water passage isolated from the inner wall of the connecting pipe 111, so that the water pollution from the water outlet hole of the shower head 3 is prevented since the water outlet joint 12 and the water inlet pipe 2 are made of environmentally friendly materials, which is more environmentally friendly; when the first splicing portion 112 is spliced with the second splicing portion 122, the end surface of the first splicing portion 112 is pressed against the end surface of the second splicing portion 122, and the first curved surface 1121 connects the second curved surface 1222, so that the sealing member 33 slides more smoothly at the position where the first splicing portion 112 is spliced with the second splicing portion 122, which is more convenient for the user to operate.

### Embodiment 2

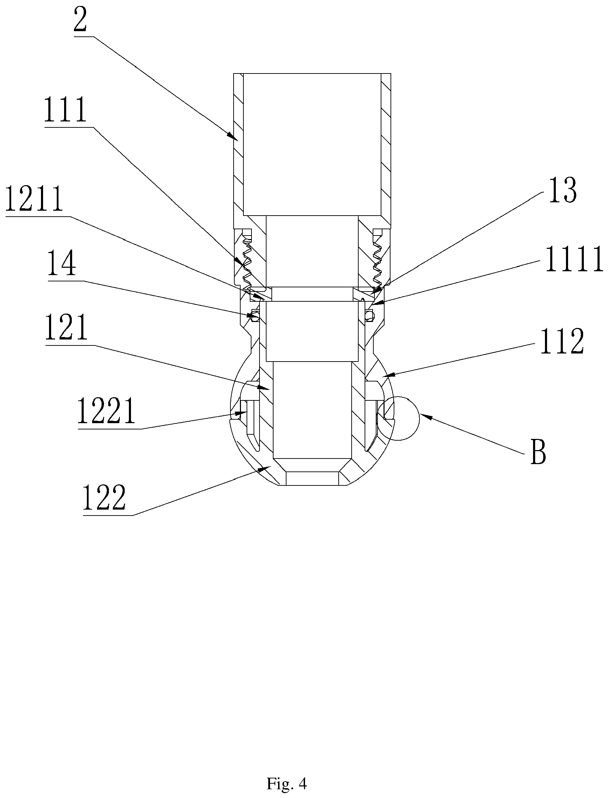

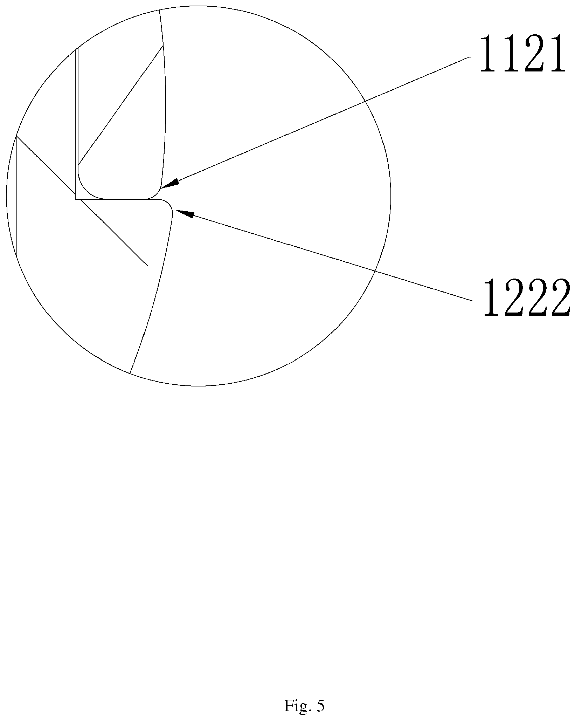

As shown in Figs. 4 and 5, the structure of Embodiment 2 is basically the same as that of Embodiment 1, except in that in Embodiment 2, a maximum outer diameter of the second splicing portion 122 is greater than a maximum outer diameter of the first splicing portion 112. In the present embodiment, when the spherical joint 1 is matched with the spherical surface of the shower head, a connecting cover is sleeved on the first splicing portion 112 of the spherical joint 1 and a sealing memberis sleeved on the second splicing portion 122 of the spherical joint 1, such that the water inlet end of the shower head is in sealed communication with the plug-in pipe 121, and the sealing member rotates with the shower head as the shower head rotates on the spherical body, when the sealing member partially slides to a position where the second splicing portion 122 is spliced with the first splicing portion 112, since the maximum outer diameter of the second splicing portion 122 is greater than the maximum outer diameter of the first splicing portion 112, the sealing member could slide onto the first splicing portion 112 more easily , and a portion of the sealing member located on the first splicing portion could slide to the second splicing portion 122 just under the pushing force of the connecting cover, which is convenient for the user to operate.

### Embodiment 3

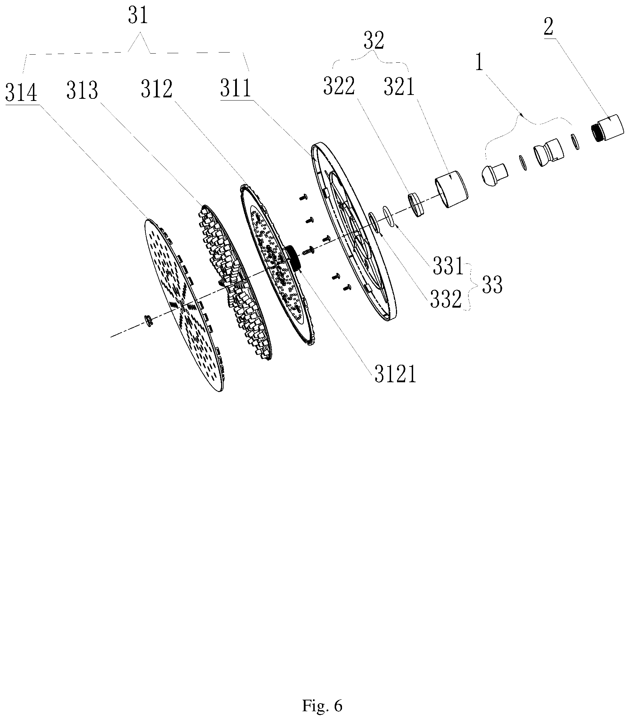

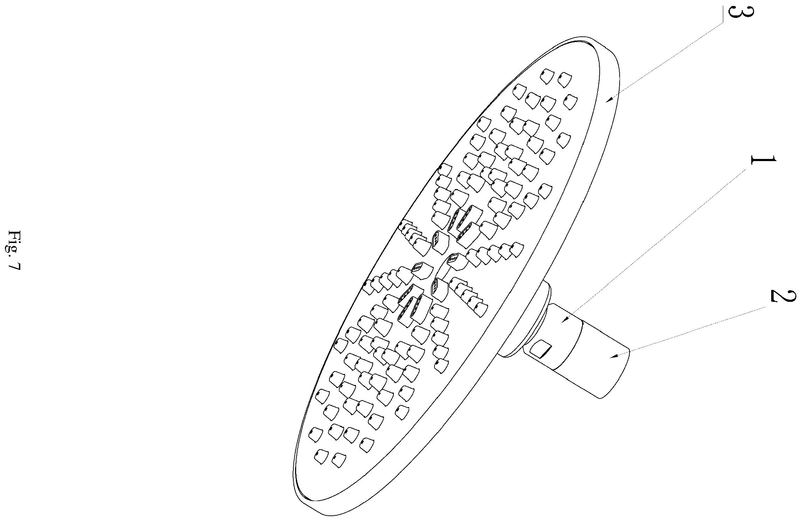

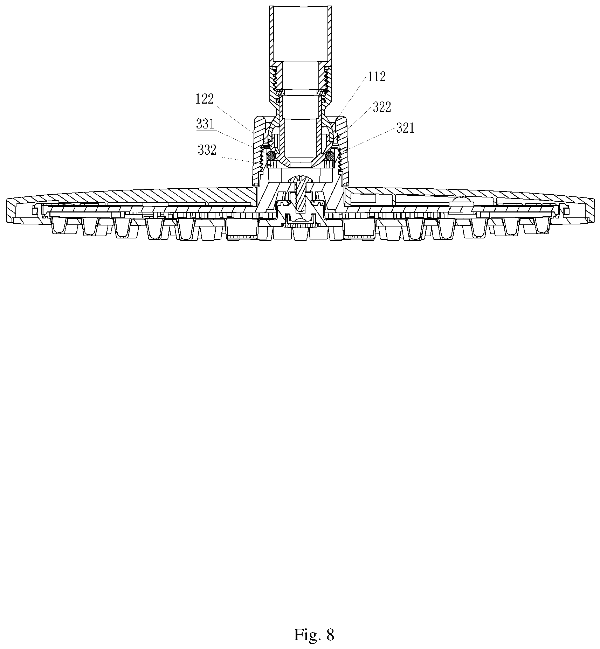

As shown in Figs. 6 to 8, based on Embodiment 1, the present invention further provides a shower assembly which includes a spherical joint 1, a water inlet pipe 2 and a shower head 3, wherein the spherical joint 1 is the spherical joint 1 of Embodiment 1, and the shower head 3 is made of environmentally friendly materials.

An outer wall of an end of the water inlet pipe 2 is provided with external threads; the water inlet pipe 2 extends into the connecting pipe 111 to be in threaded connection with the connecting pipe 111 and press against an upper end of the sealing washer 13, and further to be in sealed communication with the plug-in pipe 121 for forming a water passage that is isolated from the inner wall of the connecting pipe 111;
the shower head 3 includes a shower head body 31, the connecting cover 32 and the sealing member 33;
the shower head body 31 is a common shower head body structure, including a first body 311, an inner bracket 312, a water outlet sleeve 313, and a surface cap 314 that are connected in sequence, wherein the first body 311 is made of ABS plastic, the inner bracket 312 and the surface cap 314 are made of polyoxymethylene, and the water outlet sleeve 313 is made of silicone LSR, which will not be described in detail here. Among them, the inner bracket 312 is provided with a receiving cavity 3121 with an opening facing the water outlet end of the spherical joint 1, several water inlet holes are uniformly distributed at a bottom of the receiving cavity 3121, an outer side wall of the receiving cavity 3121 is provided with external threads, and the receiving cavity 3121 is provided inside with a fourth annular protrusion (not shown); several water outlet holes are uniformly distributed on the surface cap 314, and the water outlet holes are in sealed communication with the water inlet holes.

The connecting cover 32 includes a cover body 321 and a spherical joint sleeve 322, wherein the spherical joint sleeve 322 is sleeved on the first splicing portion 112 of the spherical joint 1 and forms a spherical fit with the first splicing portion 112, the cover body 321 is sleeved outside the spherical joint sleeve 322, and an inner side wall of the cover body 321 is provided with internal threads that are matched with the external threads of the receiving cavity 3121, so that the connecting cover 32 is in threaded connection with the shower head body 31. When in threaded connection, the water outlet end of the spherical joint 1 is located in the receiving cavity 3121, and the plug-in pipe 121 is in sealed communication with the water inlet holes of the shower head body 31. Among them, the cover body 321 is made of plastic ABS757K, and the spherical joint cover 322 is made of polyoxymethylene POM (M90).

The sealing member 33 includes a second sealing ring 331 and an annular gasket 332 provided on the fourth annular protrusion in the receiving cavity 3121, wherein the sealing ring is placed on the annular gasket, and both the sealing ring and the annular gasket are sleeved on the second splicing portion 122 of the spherical joint 1. Among them, the second sealing ring 331 is made of nitrile rubber NBR70°, and the annular gasket is made of polyoxymethylene.

The assembly process is as follows:
After the shower head body 31 is assembled, the annular gasket 332 is placed on the fourth annular protrusion of the receiving cavity 3121, the second sealing ring 331 is placed on the annular gasket 332, and the second slicing portion 122 of the spherical joint 1 is inserted into the second sealing ring 331 and the annular gasket 332, then the spherical joint sleeve 322 is sleeved on the first splicing portion 112 of the spherical joint 1 from top to bottom, followed by sleeving the cover body 321 outside the spherical joint sleeve 322 from top to bottom to make an inner side wall of the cover body 321 in threaded connection with an outer side wall of the receiving cavity 3121, so that the shower head body 31 is fixedly connected to the connecting cover 32, at which time the second sealing ring 331 is in clearance fit with the spherical joint sleeve 332.

The shower assembly of the present embodiment is the spherical joint 1 in Embodiment 1, and the spherical joint 1 consists of a connector 11 and a water outlet joint 12 that can be separated from each other, which reduces difficulty in processing, saves production costs, and improves production efficiency, as compared with an integrally formed spherical joint 1; the first splicing portion 112 is sleeved on the first annular protrusion 1221 and spliced with the second splicing portion 122 to form a spherical body that is matched with a spherical surface of the shower head 3, which facilitates the assembly; a maximum outer diameter of the second splicing portion 122 is equal to a maximum outer diameter of the first splicing portion 112, so that after the first splicing portion 112 is spliced with the second splicing portion 122 to form the spherical body, it is easier to smoothly transition at the position where the second splicing portion 122 is spliced with the first splicing portion 112 for facilitating rotation when the shower head 3 is matched with the spherical body, wherein in specific implementation, the shower head body 31 is spherically matched with the second splicing portion 122 through the sealing member 33, and the connecting cover 32 is spherically matched with the first splicing portion 112, so that during the rotation of the shower head 3, when the sealing member 33 partially slides to the position where the second splicing portion 122 is spliced with the first splicing portion 112, since the maximum outer diameter of the second splicing portion 122 is equal to the maximum outer diameter of the first splicing portion 112, the sealing member 33 could slide onto the first splicing portion 112 more easily, and a portion of the sealing member 33 located on the first splicing portion may slide to the second splicing portion 122 just under the pushing force of the connecting cover 32, which is convenient for the user to operate; the plug-in pipe 121 of the water outlet joint 12 is in sealed communication with the water inlet pipe 2 to form a water passage isolated from the inner wall of the connecting pipe 111, and the water inlet hole of the shower head body 31 is in sealed communication with the plug-in pipe 121, and since the water outlet joint 12, the water inlet pipe 2, and the shower 3 are made of environmentally friendly materials, the water pollution from the water outlet hole of the shower head 3 is prevented, which is more environmentally friendly.

### Embodiment 4

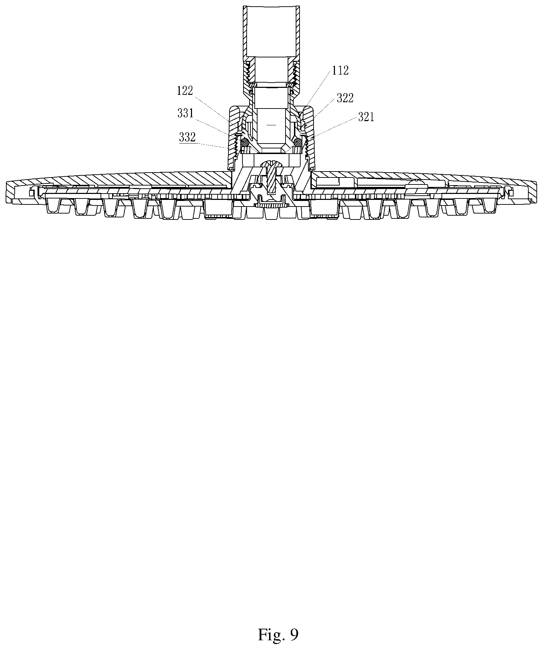

As shown in Fig. 9, based on Embodiment 2, the present invention further provides a shower assembly, which has the same structure as that of Embodiment 3 except merely in that for the spherical structure in this embodiment, a maximum outer diameter of the second splicing portion 122 is greater than a maximum outer diameter of the first splicing portion 112. In the present embodiment, during the process of rotating the shower head 3, when the sealing member 33 partially slides to a position where the second splicing portion 122 is spliced with the first splicing portion 112, since the maximum outer diameter of the second splicing portion 122 is greater than the maximum outer diameter of the first splicing portion 112, the sealing member 33 could slide onto the first splicing portion 112 more easily, and a portion of the sealing member 33 located on the first splicing portion could slide to the second splicing portion 122 just under the pushing force of the connecting cover 32, which is convenient for the user to operate.

The above description of the specification and the embodiments are used to explain the protection scope of the present invention, but do not constitute a limitation on the protection scope of the present invention. Through the teaching of the present invention or the above embodiments, the modifications, equivalent replacements, or other improvements to the technical features of the embodiments of the present invention or a part thereof obtained by those skilled in the art through logical analysis, reasoning, or limited experiments with combination of common general knowledge, common technical knowledge in the art and/or prior art should all be included in the protection scope of the present invention.

## Claims

1. A spherical joint (1) for communicating a water inlet pipe (2) made of environmentally friendly materials and a water inlet end of a shower head (3) and making the shower head (3) rotatable, **characterized by** comprising:
a connector (11), provided with a connecting pipe (111) and a first splicing portion (112), one end of the connecting pipe (111) being in sealed connection with the water inlet pipe (2), the first splicing portion (112) extending from an outer wall of the connecting pipe (111) in a direction away from the water inlet end of the connecting pipe (111) and forming a bowl shape; and
a water outlet joint (12), provided with a plug-in pipe (121) and a second splicing portion (122), the second splicing portion (122) extending from an outer wall of the plug-in pipe (121) in a direction close to the connector (11) and forming a bowl shape, the second splicing portion (122) further extending to form a first annular protrusion (1221) in a direction close to the connector (11), a maximum outer diameter of the second splicing portion (122) being greater than or equal to a maximum outer diameter of the first splicing portion (112);
the plug-in pipe (121) is inserted into the connecting pipe (111) and is in sealed communication with the water inlet pipe (2) to form a water passage that is isolated from an inner wall of the connecting pipe (111);
the first splicing portion (112) is sleeved on the first annular protrusion (1221) and spliced with the second splicing portion (122) to form a spherical body that is matched with a spherical surface of the shower head (3);
the water outlet joint (12) is made of environmentally friendly materials.

2. The spherical joint (1) according to claim 1, **characterized in that** a first curved surface (1121) is provided between an end surface of a free end of the first splicing portion (112) and an outer side wall of the first splicing portion (112), and a second curved surface (1222) is provided between an end surface of a free end of the second splicing portion (122) and an outer side wall of the second splicing portion (122); when the first splicing portion (112) is spliced with the second splicing portion (122), the end surface of the first splicing portion (112) is pressed against the end surface of the second splicing portion (122), and the first curved surface (1121)connects the second curved surface (1222).

3. The spherical joint (1) according to claim 1, **characterized by** further comprising a sealing washer (13) provided in the connecting pipe (111), wherein the plug-in pipe (121) presses against one end of the sealing washer (13), the water inlet pipe (2) presses against the other end of the sealing washer (13) such that the plug-in pipe (121) is in sealed communication with the water inlet pipe (121), and the water passage is isolated from the inner wall of the connecting pipe (111).

4. The spherical joint (1) according to claim 3, **characterized in that** a water inlet end of the plug-in pipe (121) is provided with a second annular protrusion (1211) extending in a direction close to the connector (11), and the second annular protrusion (1211) presses against one end of the sealing washer (13).

5. The spherical joint (1) according to claim 3, **characterized in that** the connecting pipe (111) is further provided inside with a third annular terrace (1111), and the sealing washer (13) is placed on the third annular terrace (1111) and partially protrudes from the third annular terrace (1111).

6. The spherical joint (1) according to claim 1, **characterized in that** the plug-in pipe (121) is in an interference fit with the connecting pipe (111).

7. The spherical joint (1) according to claim 6, **characterized by** further comprising a first sealing ring (14), wherein the connecting pipe (111) is provided inside with an annular groove, and the first sealing ring (14) is placed in the annular groove and is sleeved on the plug-in pipe (121).

8. The spherical joint (1) according to claim 1, **characterized in that** the connecting pipe (111) is integrally formed with the first splicing portion (112), and the plug-in pipe (121) is integrally formed with the second splicing portion (122).

9. A shower assembly, **characterized by** comprising:
a spherical joint (1), which is the spherical joint (1) according to any one of claims 1 to 8;
a water inlet pipe (2), in sealed connection with one end of the connecting pipe (111); and
a shower head (3), comprising a shower head body (31), a connecting cover (32) and a sealing member (33);
the shower head body (31) is provided with a receiving cavity (3121), and water inlet holes and water outlet holes that are communicated with each other, an opening of the receiving cavity (3121) is oriented to a water outlet end of the spherical joint (1), the water inlet holes are located at a bottom of the receiving cavity (3121), and the water inlet holes are in sealed communication with the plug-in pipe (121);
the connecting cover (32) is detachably fixed to the receiving cavity (3121) of the shower head body (31), sleeved on the first splicing portion (112) of the spherical joint (1), and forms a spherical fit with the first splicing portion (112);
the sealing member (33), sleeved on the second splicing portion (122) of the spherical joint (1) and forming a spherical fit with the second splicing portion (122);
the shower head (3) is made of environmentally friendly materials.

10. The shower assembly according to claim 9, **characterized in that** the water outlet end of the spherical joint (1) is located in the receiving cavity (3121).
